# EUROPEAN PATENT APPLICATION

(11) **EP 3 223 336 A1**
(43) Date of publication of application: **27.09.2017**
(21) Application number: 15860044.5
(22) Date of filing: 09.11.2015
(51) Int. Cl.: H01M 2/10, B60L 11/18, H01M 4/505, H01M 4/525, H01M 4/587, H01M 10/052, H01M 16/00, H02J 7/00, H02J 7/02, H02J 7/14

(54) **ON-VEHICLE BATTERY, AND ON-VEHICLE POWER SUPPLY DEVICE**

(30) Priority: 17.11.2014 JP 2014232825
(71) Applicant: Murata Manufacturing Co., Ltd., Nagaokakyo-shi, Kyoto 617-8555 (JP)
(72) Inventor: KAWAI, Toru, Nagaokakyo-shi Kyoto 617-8555 (JP); MORISHITA, Masanori, Nagaokakyo-shi Kyoto 617-8555 (JP); KAMITANI, Gaku, Nagaokakyo-shi Kyoto 617-8555 (JP)
(74) Representative: Reeve, Nicholas Edward
(86) International application number: PCT/JP2015/081437
(87) International publication number: WO 2016/080222

(57) **Abstract**

While reducing an increase in the cost of an on-vehicle battery for use in an on-vehicle power supply device, the on-vehicle battery is reduced in size and weight.

An on-vehicle battery 11 includes a lead storage battery 13 and a second storage battery 14. The second storage battery 14 is connected in parallel with the lead storage battery 13. The second storage battery 14 has a positive electrode and a negative electrode. The positive electrode includes, as a positive electrode active material, a spinel-type lithium-nickel-manganese oxide. The negative electrode includes, as a negative electrode active material, at least one of graphite, soft carbon, hard carbon, and an alloy-based material containing an Si element.

## Description

### TECHNICAL FIELD

The present invention relates to an on-vehicle battery and an on-vehicle power supply device including the battery.

### BACKGROUND ART

Vehicles are typically equipped with on-vehicle storage batteries for electrical power supply to various types of electrical loads such as starter motors. Lead storage batteries are used widely as on-vehicle storage batteries.

Lead storage batteries are low in price, as compared with storage batteries such as lithium ion secondary batteries and nickel-hydrogen batteries. However, lead storage batteries are inferior in resistance to frequent charge/discharge cycles, as compared with storage batteries such as lithium ion secondary batteries and nickel-hydrogen batteries. Therefore, in the case of using only lead storage batteries as on-vehicle storage batteries in vehicles that are large in electricity use because of various types of electrical loads, and vehicles provided with idling stop functions and recycling functions for regeneration energy during deceleration, there is concern about early deterioration of the lead storage batteries. For example, when the lead storage batteries are all replaced with storage batteries such as lithium ion secondary batteries and nickel-hydrogen batteries, the prices of the on-vehicle storage batteries will be increased.

Patent Document 1 states therein a voltage condition for a second storage battery that can be connected in parallel with a lead storage battery without any DC-DC converter interposed therebetween.

### PRIOR ART DOCUMENT

### PATENT DOCUMENT

Patent Document 1: Japanese Patent Application Laid-Open No. 2011-15516

### SUMMARY OF THE INVENTION

### Problem to be solved by the invention

There is demand for reducing on-vehicle batteries in size and weight, while reducing an increase in the cost of the on-vehicle batteries for use in on-vehicle power supply devices.

A main object of the present invention is to reduce an on-vehicle battery in size and weight while reducing an increase in the cost of the on-vehicle battery for use in an on-vehicle power supply device.

### Means for solving the problem

An on-vehicle battery according to the present invention includes a lead storage battery and a second storage battery. The second storage battery is connected in parallel with the lead storage battery. The second storage battery has a positive electrode and a negative electrode. The positive electrode includes, as a positive electrode active material, a spinel-type lithium-nickel-manganese oxide. The negative electrode includes, as a negative electrode active material, at least one of graphite, soft carbon, hard carbon, and an alloy-based material containing an Si element.

According to the present invention, in the second storage battery connected in parallel with the lead storage battery, the positive electrode includes, as a positive electrode active material, a spinel-type lithium-nickel-manganese oxide, whereas the negative electrode includes, as a negative electrode active material, at least one of graphite, soft carbon, hard carbon, and an alloy-based material containing an Si element. Thus, while reducing an increase in the cost of the on-vehicle battery, the on-vehicle battery can be reduced in size and weight.

In the on-vehicle battery according to the present invention, the negative electrode preferably includes, as a negative electrode active material, at least one of soft carbon, hard carbon, and an alloy-based material containing an Si element. According to this configuration, the on-vehicle battery can be further reduced in size and weight.

In the on-vehicle battery according to the present invention, the positive electrode preferably includes, as a positive electrode active material, a spinel-type lithium-nickel-manganese oxide of a composition formula Li₁₊ₐ[Mn_{2-a-x-y}NiₓM_{y}]O₄ (0 ≤ a ≤ 0.3, 0.15 ≤ x ≤ 0.6, 0 ≤ y ≤ 0.3, M represents a metal element containing Ti). According to this configuration, the on-vehicle battery can be further reduced in size and weight.

An on-vehicle power supply device according to the present invention includes the on-vehicle battery mentioned above. For this reason, the on-vehicle power supply device according to the present invention small in size and weight at low cost.

The on-vehicle power supply device according to the present invention may further include a generator connected to the on-vehicle battery.

### Advantageous effect of the invention

According to the present invention, while reducing an increase in the cost of the on-vehicle battery for use in an on-vehicle power supply device, the on-vehicle battery can be reduced in size and weight.

### BRIEF EXPLANATION OF DRAWINGS

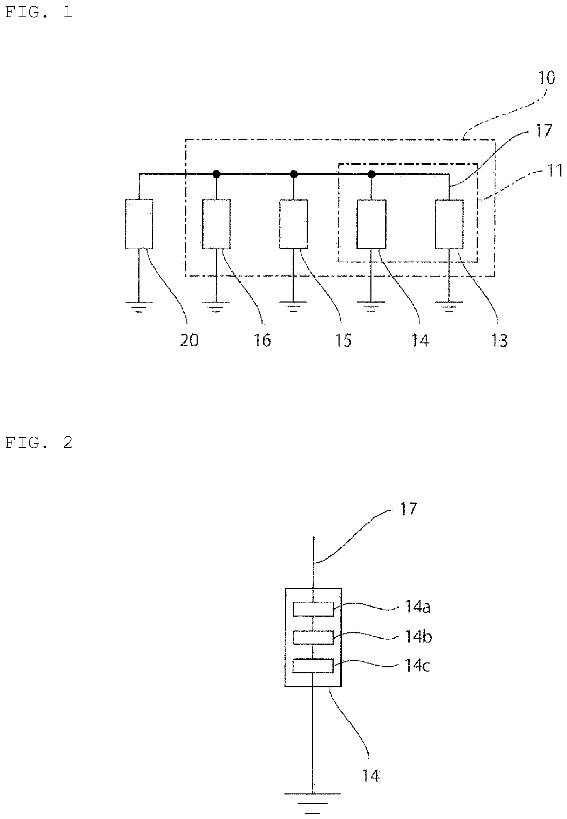

FIG. 1 is a pattern diagram of an on-vehicle power supply device according to an embodiment of the present invention.
FIG. 2 is a pattern diagram of a second storage battery according to an embodiment of the present invention.

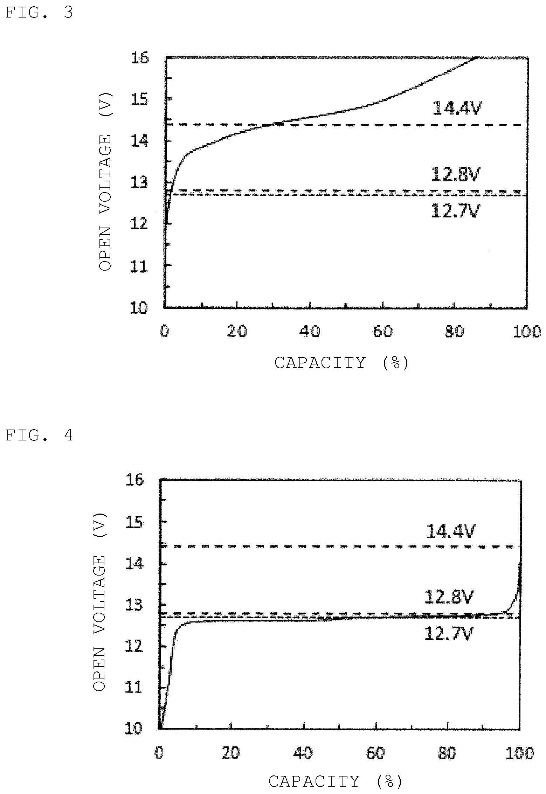

FIG. 3 is a charge/discharge curve of a lithium ion secondary battery obtained by connecting, in series, four lithium ion secondary batteries using LiNi_{5/10}Co_{2/10}Mn_{3/10}O₂ as a positive electrode active material and graphite as a negative electrode active material.
FIG. 4 is a charge/discharge curve of a lithium ion secondary battery obtained by connecting, in series, four lithium ion secondary batteries using Li₄Ti₅O₁₂ as a negative electrode active material and a spinel-type lithium-nickel-manganese oxide expressed by a composition formula Li_{1.1}[Ni_{0.45}Mn_{1.35}Ti_{0.2}]O₄ as a positive electrode active material.

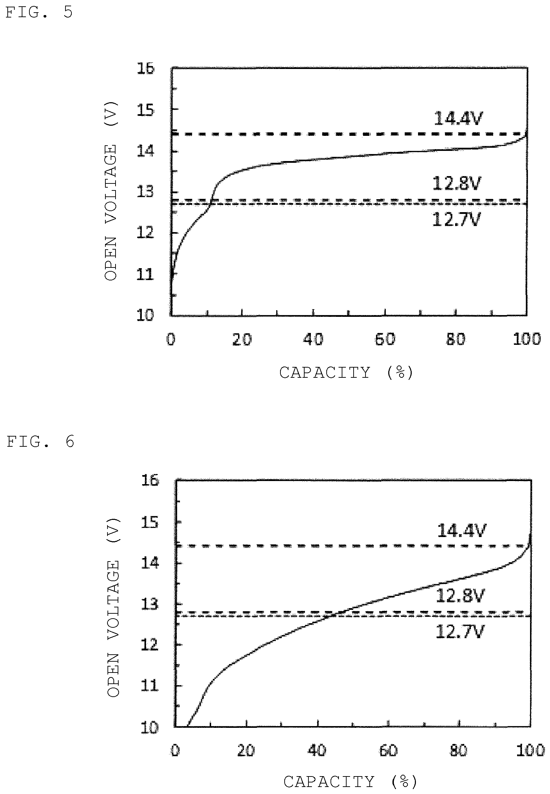

FIG. 5 is a charge/discharge curve of a second storage battery 14 (lithium ion secondary battery) obtained by connecting, in series, three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and graphite for a negative electrode active material.
FIG. 6 is a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and soft carbon for a negative electrode active material.

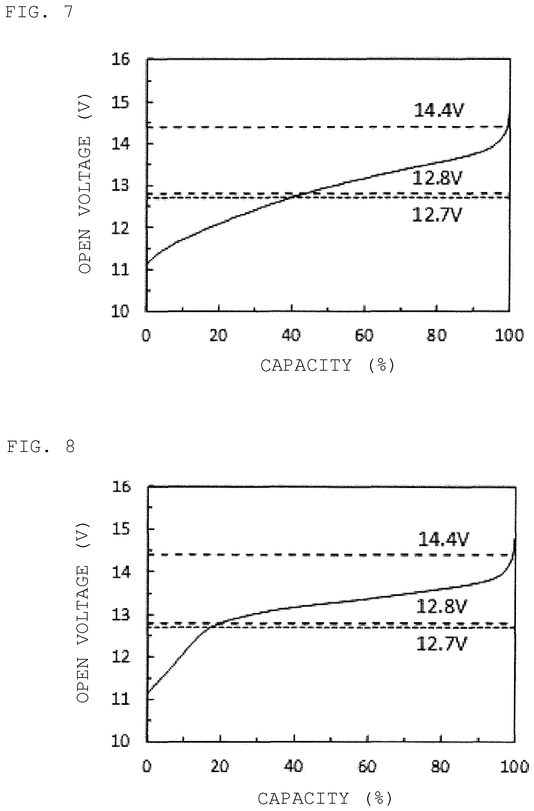

FIG. 7 is a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and hard carbon for a negative electrode active material. FIG. 8 is a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and Si for a negative electrode active material.

### MODE FOR CARRYING OUT THE INVENTION

An example of a preferred embodiment of the present invention will be described below. However, the following embodiment is considered by way of example only. The present invention is not limited to the following embodiment in any way.

In addition, members that have substantially the same functions shall be denoted by the same reference symbols in the respective drawings referred to in the embodiment and the like.

FIG. 1 is a pattern diagram of an on-vehicle power supply device according to the present embodiment. FIG. 2 is a pattern diagram of a second storage battery according to the present embodiment.

As shown in FIG. 1, an on-vehicle power supply device 10 is a device for use in an electric vehicle (EV: Electric Vehicle) or a vehicle equipped with an internal combustion engine. Specific examples of the vehicle equipped with an internal combustion engine include, for example, idling stop (ISS) vehicles, hybrid electric vehicles (HEV: Hybrid Electric Vehicle), and plug-in hybrid vehicles (PHEV: Plug-in Hybrid Electric Vehicle).

The on-vehicle power supply device 10 is a device connected to an electrical load 20 such as an on-vehicle motor, and used as a power supply for the electrical load 20. The on-vehicle power supply device 10 has an on-vehicle battery 11, a regulator 15 as a constant voltage controller, and a generator (alternator) 16. The generator 16 generates electricity. The generator 16, the regulator 15, and the on-vehicle battery 11 are connected in parallel.

The generator 16 can be composed of an internal combustion engine such as an engine, or a motor that recycles regeneration energy during deceleration. The generator 16 generates electricity. The electricity generated by the generator 16 is supplied to the electrical load 20 and the on-vehicle battery 11. The regulator 15 has the function of regulating the voltage supplied from the generator 16 to a constant voltage. In the present embodiment, an example will be explained where the regulator 15 has a voltage set to 14.4 V.

The on-vehicle battery 11 includes a lead storage battery 13 and a second storage battery 14. The lead storage battery 13 and the second storage battery 14 are connected in parallel. It is to be noted that the on-vehicle battery 11 may have any configuration besides the lead storage battery 13 and the second storage battery 14. The on-vehicle battery 11 may further have, in addition to the lead storage battery 13 and the second storage battery 14, for example, a controller connected to the lead storage battery 13 and the second storage battery 14, for preventing abnormalities of the batteries, such as over discharge, overcharge, and overheat.

The lead storage battery 13 may have multiple lead storage batteries of unit cells connected in series or parallel. In the present embodiment, an example will be explained where the lead storage battery 13 has six lead storage batteries of unit cells connected in series. In the present embodiment, the lead storage battery 13 has a voltage of 12 V. It is to be noted that the available voltage range in the case of a 12 V-lead storage battery typically has an open voltage range of 12.7 V or more and 12.8 V or less.

The second storage battery 14 is connected in parallel with the lead storage battery 13. The lead storage battery 13 and the second storage battery 14 are connected without any DC-DC converter interposed therebetween.

In the present embodiment, the second storage battery 14 is composed of lithium ion secondary batteries. More specifically, in the present embodiment, the second storage battery 14 is composed of multiple lithium ion secondary batteries connected in series on a power supply line 17. Even more specifically, in the present embodiment, as shown in FIG. 2, the second storage battery 14 is composed of three lithium ion secondary batteries 14a, 14b, 14c of three unit cells connected in series. However, the number of secondary batteries the second storage battery has is not particularly limited. The number of secondary batteries the second storage battery has is selected appropriately depending on the voltage of the lead storage battery 13 and the like.

The capacity of the lithium ion secondary battery 14a, the capacity of the lithium ion secondary battery 14b, and the capacity of the lithium ion secondary battery 14c may be equal to or different from each other, but are preferably equal to each other. When the capacity of the lithium ion secondary battery 14a, the capacity of the lithium ion secondary battery 14b, and the capacity of the lithium ion secondary battery 14c are equal to each other, battery manufacturing lines can be brought into one, which is efficient.

The lithium ion secondary batteries 14a, 14b, 14c each have a positive electrode, a negative electrode, and a non-aqueous electrolytic solution.

The positive electrode includes, as a positive electrode active material, a spinel-type lithium-nickel-manganese oxide. The positive electrode further preferably includes, as a positive electrode active material, a spinel-type lithium-nickel-manganese oxide of a composition formula Li₁₊ₐ[Mn_{2-a-x-y}NiₓM_{y}]O₄ (0 ≤ a ≤ 0.3, 0.15 ≤ x ≤ 0.6, 0 ≤ y ≤ 0.3, M represents a metal element containing Ti). In this case, the lithium ion secondary batteries 14a, 14b, 14c are less likely to be deteriorated. For this reason, the frequency of replacing the lithium ion secondary batteries 14a, 14b, 14c can be reduced. Accordingly, the on-vehicle battery 11 can be reduced in cost.

The negative electrode includes, as a negative electrode active material, at least one of graphite, soft carbon, hard carbon, and an alloy-based material containing an Si element. The negative electrode preferably includes, as a negative electrode active material, at least one of soft carbon, hard carbon, and an alloy-based material containing an Si element. Examples of the alloy-based material containing the Si element include materials such as Si, Si alloys, and silicon oxides (SiOₓ, 0 < x ≤ 2), and composite materials of the foregoing materials with carbon materials.

The positive electrode and the negative electrode may each include a conduction aid, a binder, and the like, if necessary.

Specific examples of conduction aids used preferably include, for example, carbon black, graphite, soft carbon, hard carbon, vapor-grown carbon fibers (VGCF), and carbon tubes.

Specific examples of binders used preferably include, for example, various types of resins, such as polyvinylidene fluoride, polytetrafluoroethylene, polyolefin, polyacrylic acid, carboxymethyl cellulose, styrene-butadiene rubbers, polyimide, polyamideimide, and polyacrylonitrile.

The negative electrode may be pre-doped with lithium ions.

The non-aqueous electrolytic solution includes an electrolyte salt and an organic solvent.

Specific examples of electrolyte salts used preferably include, for example, LiPF₆, LiClO₄, LiBF₄, LiCF₃SO₃, Li(CF₃SO₂)₂N, Li(C₂F₅SO₂)₂N, Li(CF₃)₂N, and LiB(CN)₄. One of these electrolyte salts may be used alone, or two or more thereof may be used in combination. The electrolyte salt concentration in the non-aqueous electrolytic solution is preferably 0.3 mol/L or more and 4 mol/L or less.

Specific examples of organic solvents used preferably include, for example, carbonate-based solvents, lactone-based solvents, sulfone-based solvents, nitrile-based solvents, ester-based solvents, ether-based solvents, and these organic solvents with some hydrogen thereof substituted with an element that is high in electronegativity, such as fluorine. One of these organic solvents may be used alone, or two or more thereof may be used in combination.

It is to be noted that the lithium ion secondary battery using a spinel-type lithium-nickel-manganese oxide as a positive electrode active material and using graphite, soft carbon, hard carbon, an alloy-based material containing an Si element as a negative electrode active material typically has an open voltage of approximately 3.0 V or higher and 4.8 V or lower in the available capacity range.

In this regard, in the on-vehicle battery 11 with the lead storage battery 13 and second storage battery 14 connected in parallel without any DC-DC converter interposed therebetween, the open voltage of the second storage battery 14 is required to meet the following condition (a), condition (b), and condition (c):

Condition (a): there is a point (open voltage coincidence) where the open voltage of the lead storage battery 13 is coincident with the open voltage of the second storage battery 14, within the available voltage range of the lead storage battery 13;

Condition (b): in a condition charged up to a higher voltage than the open voltage coincidence, the open voltage of the second storage battery 14 is higher than the open voltage of the lead storage battery 13 in the available capacity range of the second storage battery 14; and

Condition (c): the second storage battery 14 has a wide available capacity range in a range in which the open voltage of the second storage battery 14 is equal to or higher than the open voltage at the lower limit of the available voltage range of the lead storage battery 13, and equal to or lower than the charging voltage of the lead storage battery 13.

The open voltage of the second storage battery 14 is set so as to satisfy the condition (a), thereby making it possible to make the terminal voltage of the lead storage battery 13 almost coincident with the terminal voltage of the second storage battery 14 in the case of discharge. Thus, the need to always provide a DC-DC converter conventionally considered essential is eliminated. Accordingly, the on-vehicle battery 11 can be reduced in size, weight, and cost.

In addition, it is preferable for the open voltage of the second storage battery 14 to change gently within the available voltage range of the lead storage battery 13, from the perspective of preventing over discharge of the lead storage battery 13, that is, from the perspective of reduction in cost for reducing the frequency of replacing the lead storage battery 13.

The open voltage of the second storage battery 14 is set so as to satisfy the condition (b), thereby preferentially discharging the second storage battery 14 that has a higher open voltage than the lead storage battery 13 in a condition charged up to a higher voltage than the open voltage coincidence. Therefore, deterioration of the lead storage battery 13 can be suppressed, and costs can be thus reduced.

The open voltage of the second storage battery 14 is set so as to satisfy the condition (c), thereby making it possible to use the capacity of the second storage battery 14 in an effective manner without using any DC-DC converter, and thus reduce the on-vehicle power supply device 10 in size, weight, and cost. In addition, as the available capacity range of the second storage battery 14 is wider, the capacity required for the second storage battery 14 can be reduced, thereby reducing the second storage battery 14 and the on-vehicle power supply device 10 in size, weight, and cost.

In recent years, then, there has been increased demand for applying lithium ion secondary batteries to use applications required to have large capacities and high inputs and outputs. Accordingly, lithium ion secondary batteries using, as a positive electrode active material, a lithium-nickel-cobalt-manganese oxide that is larger in capacity per unit weight than spinel-type lithium-nickel-manganese oxides have come to be used widely.

In particular, secondary batteries for use in on-vehicle electric storage devices have been strongly required to have great input-output characteristics per unit time. For this reason, one skilled in the art considers, as a matter of course, that high-input/output lithium ion secondary batteries using a lithium-nickel-cobalt-manganese oxide as a positive electrode active material are preferred for on-vehicle electric storage devices. For example, a lithium ion secondary battery using LiNi_{5/10}Co_{2/10}Mn_{3/10}O₂ as a positive electrode active material and graphite as a negative electrode active material has an open voltage of approximately 2.5 V or higher and 4.2 V or lower in the available capacity range.

When a second storage battery that satisfies the condition (a) and the condition (b) is intended to be configured with the use of a lithium ion secondary battery using LiNi_{5/10}Co_{2/10}Mn_{3/10}O₂ as a positive electrode active material and graphite as a negative electrode active material, there is a need to connect four lithium ion secondary batteries in series.

FIG. 3 shows a charge/discharge curve of a lithium ion secondary battery obtained by connecting, in series, four lithium ion secondary batteries using LiNi_{5/10}Co_{2/10}Mn_{3/10}O₂ as a positive electrode active material and graphite as a negative electrode active material. As shown in FIG. 3, in the case of the foregoing lithium ion secondary battery, the open voltage is higher than the voltage range of the condition (c) in most of the available capacity range. Therefore, when this lithium ion secondary battery is connected in parallel with a lead storage battery, the battery is charged only up to a capacity on the order of 30%. Accordingly, there is a need to transform electric power with a DC-DC converter disposed between the lithium ion secondary battery and the lead storage battery, or increase the capacity of the lithium ion secondary battery. However, the DC-DC converter heats up in the transformation of electric power. For this reason, when a DC-DC converter is disposed between the lithium ion secondary battery and the lead storage battery, there is a need to provide a mechanism for cooling the DC-DC converter. As just described, for a lithium ion secondary battery using a lithium-nickel-cobalt-manganese oxide as a positive electrode active material and graphite as a negative electrode active material, there is a need to provide a DC-DC converter and a cooling mechanism therefor, or increase the capacity of the lithium ion secondary battery, in addition to the need to connect four batteries in series, thereby increasing the on-vehicle electric storage device in size, weight, and cost.

Lithium ion secondary batteries which have great input-output characteristics include lithium ion secondary batteries using, as a negative electrode active material, a lithium titanate represented by Li₄Ti₅O₁₂. For example, a lithium ion secondary battery using Li₄Ti₅O₁₂ as a negative electrode active material and a spinel-type lithium-nickel-manganese oxide as a positive electrode active material has an open voltage of approximately 3.0 V or higher and 3.2 V or lower in the available capacity range. For this reason, when a second storage battery that satisfies the condition (a) and the condition (b) is intended to be configured with the use of the foregoing lithium ion secondary battery, there is a need to connect four lithium ion secondary batteries in series.

FIG. 4 shows a charge/discharge curve of a lithium ion secondary battery obtained by connecting, in series, four lithium ion secondary batteries using Li₄Ti₅O₁₂ as a negative electrode active material and a spinel-type lithium-nickel-manganese oxide expressed by a composition formula Li_{1.1}[Ni_{0.45}Mn_{1.35}Ti_{0.2}]O₄ as a positive electrode active material. As shown in FIG. 4, in the case of the foregoing lithium ion secondary battery, the open voltage is lower than the voltage range of the condition (c) in most of the available capacity range. Therefore, there is a need to transform electric power with a DC-DC converter disposed between the lithium ion secondary battery and the lead storage battery. As just described, for a lithium ion secondary battery using Li₄Ti₅O₁₂ as a negative electrode active material and a spinel-type lithium-nickel-manganese oxide as a positive electrode active material, there is a need to provide a DC-DC converter and a cooling mechanism therefor, in addition to the need to connect four secondary batteries in series, thereby increasing the on-vehicle electric storage device in size, weight, and cost.

FIG. 5 shows a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and graphite for a negative electrode active material. FIG. 6 shows a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and soft carbon for a negative electrode active material. FIG. 7 shows a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and hard carbon for a negative electrode active material. FIG. 8 shows a charge/discharge curve of the second storage battery 14 (lithium ion secondary battery) obtained by connecting, in series, the three lithium ion secondary batteries (unit cells) 14a, 14b, 14c using, for a positive electrode active material, a spinel-type lithium-nickel-manganese oxide expressed by a composition formula Li_{1.1}[Ni_{0.45}Mn_{1.35}Ti_{0.2}]O₄, and Si for a negative electrode active material.

As shown in FIGS. 5 to 8, according to the present embodiment, the wide available capacity range in the voltage range of the condition (c) is 50% or more in the configuration obtained by connecting, in series, the three lithium ion secondary batteries (unit cells) 14a, 14b, 14c that satisfy the condition (a) and the condition (b). Therefore, in the on-vehicle power supply device 10, there is not always a need to provide a DC-DC converter or a cooling system therefor. In addition, the number of lithium ion secondary batteries in series can be three, thus allowing the second storage battery 14 (lithium ion secondary battery) and the on-vehicle power supply device 10 to be reduced in size, weight, and cost.

In addition, in the condition (a), from the perspective of preventing over discharge of the lead storage battery 13, the open voltage of the second storage battery 14 preferably changes gently in the open voltage range of 12.7 V or more and 12.8 V or less, which is the available voltage range of the lead storage battery 13. From FIGS. 5 to 8, when soft carbon, hard carbon, or Si is used for the negative electrode active material, the change in open voltage is gentle in the open voltage range of 12.7 V or more and 12.8 V or less, as compared with a case where graphite is used for the negative electrode active material. Therefore, it is determined that it is preferable for the negative electrode active material to include therein at least one of soft carbon, hard carbon, and an alloy-based material containing an Si element, from the perspective of preventing over discharge of the lead storage battery.

### DESCRIPTION OF REFERENCE SYMBOLS

10: on-vehicle power supply device
11: on-vehicle battery
13: lead storage battery
14: second storage battery
14a, 14b, 14c: lithium ion secondary battery
15: regulator
16: generator
17: power supply line
20: electrical load

## Claims

1. An on-vehicle battery comprising a lithium ion secondary battery comprising: a lead storage battery; and a second storage battery connected in parallel with the lead storage battery; wherein the second storage battery comprises: a positive electrode comprising, as a positive electrode active material, a spinel-type lithium-nickel-manganese oxide; and a negative electrode comprising, as a negative electrode active material, at least one of graphite, soft carbon, hard carbon, and an alloy-based material containing an Si element.

2. The on-vehicle battery according to claim 1, wherein the negative electrode comprises, as a negative electrode active material, at least one of soft carbon, hard carbon, and an alloy-based material containing an Si element.

3. The on-vehicle battery according to one of claims 1 and 2, wherein the positive electrode comprises, as a positive electrode active material, a spinel-type lithium-nickel-manganese oxide of a composition formula Li₁₊ₐ[Mn_{2-a-x-y}NiₓM_{y}]O₄ (0 ≤ a ≤ 0.3, 0.15 ≤ x ≤ 0.6, 0 ≤ y ≤ 0.3, M represents a metal element containing Ti).

4. An on-vehicle power supply device comprising the on-vehicle battery according to any one of claims 1 to 3.

5. The on-vehicle power supply device according to claim 4, further comprising a generator connected to the on-vehicle battery.
